(19) Europäisches Patentamt
European Patent Office
Office européen des brevets

(11) **EP 3 166 772 B1**

(12) **FASCICULE DE BREVET EUROPEEN**

(45) Date de publication et mention
de la délivrance du brevet:
**24.01.2018 Bulletin 2018/04**

(21) Numéro de dépôt: **15745538.7**

(22) Date de dépôt: **02.07.2015**

(51) Int Cl.:
*B29C 49/12* (2006.01)    *B29C 49/78* (2006.01)
*B29C 49/48* (2006.01)    *G05B 19/27* (2006.01)
*G05B 19/40* (2006.01)    *G05B 19/406* (2006.01)
*B29K 105/00* (2006.01)    *B29L 31/00* (2006.01)
*B29K 67/00* (2006.01)    *B29K 21/00* (2006.01)

(86) Numéro de dépôt international:
**PCT/FR2015/051828**

(87) Numéro de publication internationale:
**WO 2016/005682 (14.01.2016 Gazette 2016/02)**

(54) **MESURE DE LA COURSE DE BOXAGE PAR LA FONCTION ÉTIRAGE, DANS UNE INSTALLATION DE FABRICATION DE RÉCIPIENTS**

MESSUNG DES VERPACKUNGSWEGS MITTELS ZIEHFUNKTION IN EINER ANLAGE ZUR HERSTELLUNG VON BEHÄLTERN

MEASUREMENT OF THE BOXING TRAVEL BY THE DRAWING FUNCTION, IN A FACILITY FOR PRODUCING CONTAINERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2014 FR 1456739**

(43) Date de publication de la demande:
**17.05.2017 Bulletin 2017/20**

(73) Titulaire: **Sidel Participations**
**76930 Octeville-sur-Mer (FR)**

(72) Inventeur: **PROTAIS, Pierrick**
**76930 Octeville-sur-Mer (FR)**

(74) Mandataire: **Siloret, Patrick**
**Sidel Participations**
**Avenue de la Patrouille de France**
**CS60627 Octeville-sur-mer**
**76059 Le Havre Cedex (FR)**

(56) Documents cités:
**WO-A1-2012/156614    WO-A1-2012/156638**
**DE-A1- 2 450 696**

**Description**

L'invention a trait au paramétrage des installations de fabrication des récipients par étirage soufflage d'ébauches en matière plastique, par exemple en polyéthylène téréphtalate (PET).

Ordinairement, un récipient comprend un corps, un fond fermant le corps à une extrémité inférieure de celui-ci, et un col qui s'ouvre à une extrémité supérieure du corps pour permettre le remplissage et la vidange du récipient.

Une technique classique de fabrication de récipients est le soufflage. Cette technique consiste à introduire l'ébauche (i.e. une préforme ou un récipient intermédiaire ayant subi une opération de préformage), préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par le col, un fluide, tel qu'un gaz (généralement de l'air), sous pression pour plaquer la matière contre la paroi du moule.

Sous l'effet de la pression, la matière ramollie par la chauffe forme une bulle qui enfle et se développe à la fois suivant une direction axiale, parallèle à l'axe principal du moule, et suivant une direction radiale, perpendiculaire à l'axe du moule.

Afin d'éviter tout désaxement du récipient et d'assurer une bonne répartition de la matière, l'étirage axial de l'ébauche est forcé au moyen d'une tige déplaçable axialement dans le moule, cette tige comprenant une extrémité distale venant repousser le fond de l'ébauche jusqu'à venir le plaquer contre un fond de moule à l'empreinte du fond du récipient. Cette technique est appelée étirage soufflage.

Il est connu, pour certaines applications, que le fond de moule soit mobile par rapport à la paroi entre une position sortie dans laquelle le fond de moule est en retrait par rapport à la cavité, et une position rentrée dans laquelle le fond de moule ferme la cavité. Initialement en position rétractée, le fond de moule est déplacé vers sa position déployée pendant le formage du récipient.

Cette technique, appelée « boxage » et décrite en détail dans la demande de brevet français FR 2 975 332 ou son équivalent international WO 2012/156638 (toutes deux au nom de Sidel Participations), permet d'accroître le taux d'étirage de la matière et a pour double avantage de renforcer structurellement le fond du récipient et d'améliorer la prise d'empreinte de celui-ci. WO 2012/156638 décrit un procédé de boxage selon le préambule de la revendication 1. La technique du boxage est complexe car, suivant la forme et la profondeur des reliefs (encore appelés réserves) à réaliser sur le fond du récipient, le repoussage opéré par le fond de moule peut conduire à un amincissement de la matière, voire à une rupture locale de la paroi du récipient au niveau de son fond, qui rend celui-ci inexploitable. C'est pourquoi le réglage des machines de fabrication incluant la fonction boxage est délicat ; il est généralement confié à des opérateurs expérimentés dont le tour de main permet de réaliser au jugé des récipients conformes. Mais il est alors difficile d'obtenir une qualité constante pour les récipients, chaque opérateur ayant son propre tour de main. En outre, les opérateurs expérimentés n'étant pas toujours disponibles pour corriger les réglages, il est parfois nécessaire de stopper la ligne de production pour éviter l'accumulation de récipients non conformes.

Lors d'un changement de référence (en d'autres termes de modèle de récipient) sur la machine, l'opérateur peut être amené à modifier certains paramètres liés au boxage, notamment la course de boxage, c'est-à-dire la distance séparant la position rentrée du fond de moule de sa position sortie.

Une telle modification, si elle n'est pas effectuée correctement, peut conduire à des malformations affectant les récipients.

Il en résulte l'arrêt de l'installation, consécutif à la prise de conscience par l'opérateur d'un défaut récurrent affectant les récipients produits et une mise au rebut des récipients fabriqués entre la mise en route de la production et l'arrêt de l'installation.

Un premier objectif est par conséquent de proposer une solution permettant d'améliorer la qualité des récipients produits.

Un deuxième objectif est de proposer une solution permettant de limiter les risques de malformation des récipients, notamment au niveau de leurs fonds.

Un troisième objectif est de limiter, voire d'éviter, les erreurs de paramétrage lors des changements de référence sur les installations de fabrication des récipients.

A cet effet, il est proposé un procédé de paramétrage d'une installation de fabrication de récipients par étirage soufflage à partir d'ébauches en matière plastique, cette installation comprenant :

- un moule muni d'une paroi définissant une cavité à l'empreinte du récipient, s'étendant selon un axe principal du moule et d'un fond de moule déplaçable axialement par rapport à la paroi entre une position sortie et une position rentrée,
- un dispositif de commande du déplacement du fond de moule, apte à exercer sur le fond de moule une poussée axiale pour le déplacer de sa position sortie à sa position rentrée et réciproquement ;
- un dispositif d'étirage comprenant une tige d'étirage déplaçable axialement par rapport à la paroi et une machine électrique accouplée à la tige ;

ce procédé comprenant les opérations consistant, à partir d'une configuration initiale dans laquelle la tige est dans une position haute écartée du fond de moule et dans laquelle le fond de moule est dans sa position sortie ou dans sa position rentrée, à :

- faire fonctionner la machine électrique en moteur pour exercer sur la tige une force motrice axiale qui la déplace vers le fond de moule ;
- évaluer la résultante des efforts axiaux exercés sur la tige ;
- dès lors qu'est détectée une variation dans la résultante des efforts, affecter à la tige une position d'origine ;
- mémoriser la position d'origine ;
- commander le déplacement du fond de moule vers sa position rentrée ou, respectivement, sa position sortie ;
- affecter à la tige la position correspondante, dite finale, de la tige ;
- calculer et mémoriser l'écart, appelé course de la tige, entre la position finale et la position d'origine.

La course de la tige étant égale à la course du fond de moule, ce procédé permet de vérifier, préalablement à la mise en production, la course du fond de moule et donc d'éviter que des erreurs affectant les réglages effectués par l'opérateur n'affectent la production.

Diverses caractéristiques supplémentaires peuvent être prévues, seules ou en combinaison :

- dans la configuration initiale, le fond de moule est dans sa position sortie ;
- il est prévu, entre l'opération de mémorisation de la position d'origine et la commande de déplacement du fond de moule, une opération consistant à replacer la tige en position haute ;
- il est prévu, après l'opération de commande de déplacement du fond de moule, les opérations consistant à :

  - la machine électrique fonctionnant en moteur, déplacer la tige depuis sa position haute vers le fond de moule ;
  - évaluer la résultante des efforts axiaux exercés sur la tige ;
  - dès lors qu'est détectée une variation dans la résultante des efforts, affecter à la tige sa position finale ;

- il est prévu, entre l'opération de mémorisation de la position d'origine et la commande de déplacement du fond de moule, une opération consistant à cesser d'appliquer la force motrice axiale sur la tige ;
- la cessation de l'application de la force motrice axiale sur la tige est réalisée par la cessation du fonctionnement de la machine électrique en moteur ;
- après la cessation de l'utilisation de la machine électrique en moteur et avant la commande de déplacement du fond de moule, la machine électrique est basculée pour fonctionner en générateur ;
- il est prévu, après la commande du déplacement du fond de moule, une temporisation prédéterminée ;
- il est prévu une opération de comparaison de la course de la tige avec une valeur théorique prédéterminée ;
- l'évaluation de la résultante des efforts axiaux exercés sur la tige est réalisée par la mesure du courant consommé par la machine électrique fonctionnant en moteur, et la détection d'une variation dans la résultante des efforts exercés sur la tige est réalisée par la détection d'une variation dans le courant consommé par la machine électrique fonctionnant en moteur.

D'autres objets et avantages de l'invention apparaîtront à la lumière de la description d'un mode de réalisation, faite ci-après en référence aux dessins annexés dans lesquels :

- la figure 1 est une vue schématique d'une machine de fabrication de récipients par étirage soufflage à partir de préformes en matière plastique, cette machine étant équipée d'une pluralité de postes de formage ;
- la figure 2 est une vue en perspective partielle illustrant un poste de formage équipant une machine telle que schématisée sur la figure 1 ;
- les figures 3 et 4 sont des vues de détail illustrant le poste de formage dans deux positions différentes de la tige d'étirage ;
- les figures 5, 6 et 7 sont des diagrammes sur lequel sont tracés, de haut en bas et suivant trois modes de réalisation :

  - une courbe illustrant les variations de position verticale de la tige ;
  - un chronogramme illustrant la commande de déplacement du fond de moule ;
  - une courbe illustrant les variations des efforts appliqués à la tige ;
  - une courbe illustrant les variations du courant électrique consommé par la machine électrique à laquelle la tige est accouplée.

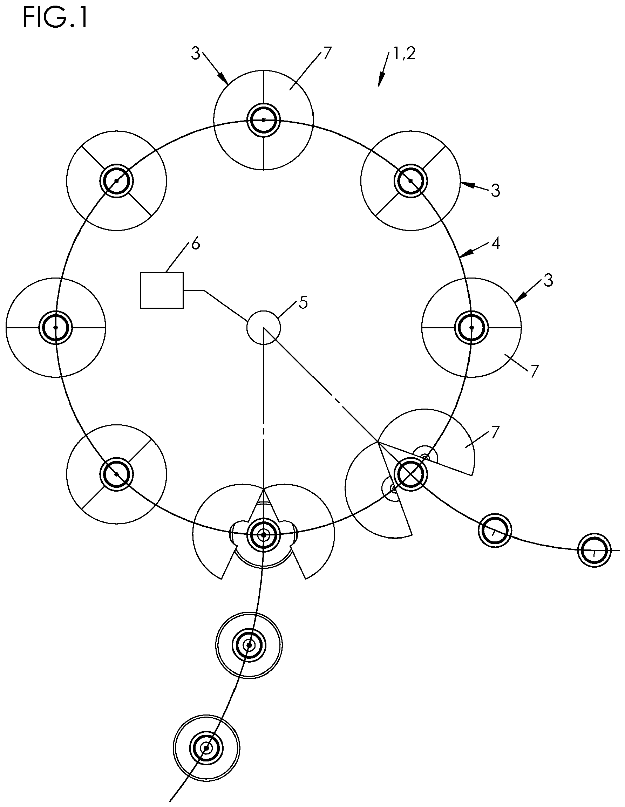

On a partiellement représenté sur la figure 1 une installation 1 de fabrication de récipients par étirage soufflage à partir d'ébauches en matière plastique (notamment PET). Les ébauches peuvent être des préformes, formées par injection de la matière plastique, ou encore des récipients intermédiaires formés à partir des ébauches mais qui, n'ayant pas la forme des récipients finaux, sont destinés à subir une ou plusieurs opérations de finition, y compris une opération de soufflage.

Cette installation **1** comprend une unité de conditionnement thermique, dans laquelle les ébauches défilent pour y être chauffées à une température supérieure à la température de transition vitreuse de la matière (d'environ 80°C pour le PET), et une unité **2** de formage (schématisée sur la figure 1) vers laquelle les ébauches sont transférées depuis l'unité de conditionnement thermique pour être mises en forme par étirage soufflage.

Comme schématisé sur la figure 1, l'unité **2** de formage comprend au moins un poste **3** de formage d'un récipient par étirage soufflage. En pratique, l'unité **2** de formage comprend en fait un carrousel tournant ou roue **4,** et une série de postes **3** de formage montés sur la roue **4,** à la périphérie de celle-ci.

Selon un mode préféré de réalisation, l'unité **2** de formage comprend un capteur **5** de la position angulaire instantanée de la roue, sous forme par exemple d'un codeur (c'est-à-dire, en pratique, un roulement instrumenté).

L'installation comprend un système de commande qui pilote de manière automatique son fonctionnement, sous forme d'une unité **6** centrale de contrôle informatisée, et des contrôleurs (par exemple du type API - acronyme d'Automate programmable industriel) équipés d'actionneurs pilotant individuellement chaque poste **3** de formage.

Chaque poste **3** de formage comprend, en premier lieu, un moule **7** muni d'une paroi **8** définissant une cavité **9** à l'empreinte du récipient à former, qui s'étend selon un axe **10** principal, et d'un fond **11** de moule muni d'une surface **12** supérieure à l'empreinte du fond du récipient à former.

Le moule **7** est par exemple du type portefeuille et comprend deux demi-moules articulés autour d'une charnière commune et qui s'ouvrent pour permettre, successivement, l'évacuation d'un récipient formé et l'introduction d'une préforme préalablement chauffée dans l'unité de conditionnement thermique.

La paroi **8** présente, dans une partie inférieure, une ouverture **13** définissant un passage pour le fond **11** de moule, lequel est monté déplaçable axialement par rapport à la paroi **8** entre :

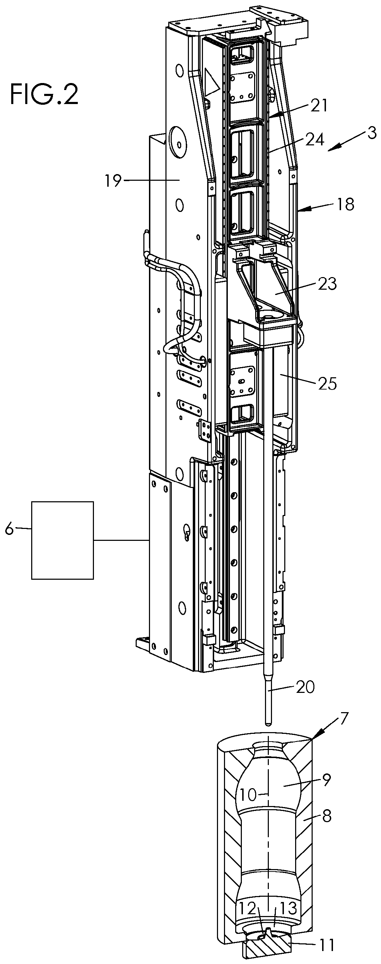

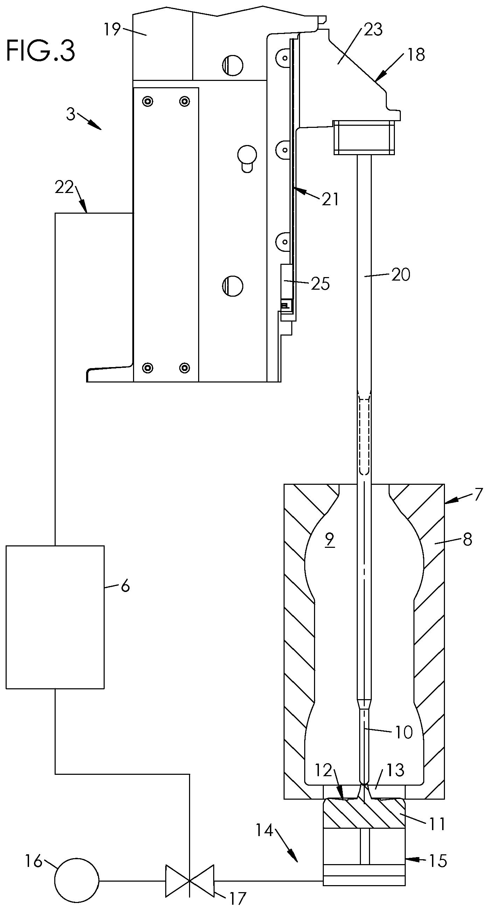

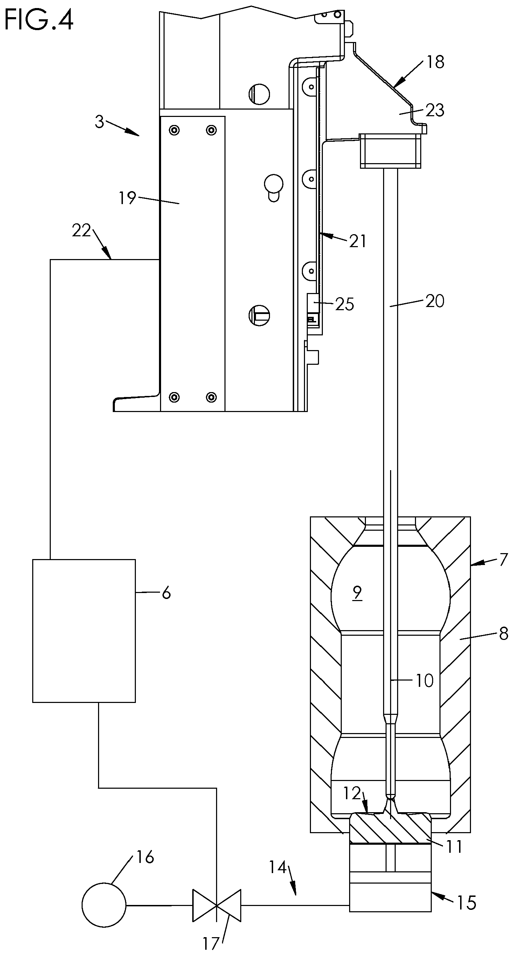

-   une position sortie, dans laquelle le fond **11** de moule est écarté de la cavité **9** (figures 2, 3), et
-   une position rentrée dans laquelle le fond **11** de moule ferme la cavité **9** en obturant l'ouverture **13,** la surface **12** supérieure complétant ainsi l'empreinte du récipient à former (figure 4).

La mobilité du fond **11** de moule permet, au cours d'une opération de boxage consistant, à partir de la position sortie, à déplacer le fond **11** de moule vers sa position rentrée pendant le soufflage du récipient, de réaliser sur le fond de celui-ci un étirage important de la matière qui, par accroissement de sa cristallinité, présente une rigidité structurelle accrue.

Chaque poste **3** de formage comprend, en deuxième lieu, un dispositif **14** de commande du déplacement du fond **11** de moule, apte à exercer sur celui-ci une poussée axiale pour le déplacer de sa position sortie à sa position rentrée, et réciproquement.

Ce dispositif **14** de commande comprend par exemple un vérin **15** sur lequel est monté le fond **11** de moule, ce vérin **15** étant relié à une source **16** de fluide (par exemple à une pression utilisée pour effectuer le soufflage des récipients) par l'intermédiaire d'une électrovanne **17** pilotée par l'unité **6** centrale de contrôle.

Chaque poste **3** de formage comprend, en second lieu, un dispositif **18** d'étirage équipé d'un bâti **19** fixé sur la roue **4** et qui s'étend sensiblement à l'aplomb du moule **7.**

Le dispositif **18** d'étirage comprend une tige **20** d'étirage mobile par rapport au bâti **19** (et donc par rapport au moule **7**) et destinée à maintenir le récipient en cours de formage dans l'axe **10** du moule **7,** ainsi qu'une machine **21** électrique accouplée à la tige **20** pour en assurer, dans certaines conditions, le déplacement. La machine **21** électrique est reliée à l'unité **6** centrale de contrôle qui en assure la commande par alimentation en courant alternatif via un circuit **22** électrique.

Plus précisément, selon un mode de réalisation illustré sur les figures, le dispositif **18** d'étirage comprend un chariot **23** monté coulissant par rapport au bâti **19,** et sur lequel la tige **20** est fixée par une extrémité supérieure.

La machine **21** électrique est par exemple un moteur d'induction linéaire (asynchrone) comprenant :

-   un stator **24** linéaire solidaire du bâti **19,** alimenté en courant pour produire un champ magnétique sous la commande de l'unité **6** centrale de contrôle,
-   un rotor **25** linéaire solidaire du chariot **23,** monté en regard du stator **24** et formé par exemple d'une plaque d'un matériau métallique tel que cuivre, fer ou aluminium.

Par l'intermédiaire du chariot **23,** la tige **20** est ainsi montée mobile par rapport au bâti **19** (et donc par rapport au moule **7**) entre

-   une position haute extrême (figure 2 et en pointillés sur la figure 3) dans laquelle la tige **20** est complètement sortie du moule **7,**
-   une position basse extrême (en trait plein sur la figure 3) dans laquelle la tige **20** est reçue dans le moule **7** en venant au contact du fond **11** de moule, lui-même étant en position sortie.

La machine **21** électrique peut fonctionner selon deux modes :

-   un mode moteur, dans lequel la machine **21** est alimentée en courant, le stator **24** produisant alors un champ magnétique qui, par induction, génère sur le rotor **25** (et sur le chariot **23** et la tige **20**) une force électromotrice qui tend à le déplacer ;
-   un mode générateur, dans lequel l'alimentation du stator **24** en courant alternatif est coupée, et dans lequel le déplacement forcé de la tige **20** (et donc du chariot **23**) crée a contrario dans le rotor **25** un champ magnétique qui induit dans le circuit **22** électrique d'alimentation du stator **24** un courant électrique, lequel génère à son tour un champ magnétique dans le stator **24** et une force contre-électromotrice qui s'oppose au déplacement forcé de la tige **20**.

On nomme course de boxage la distance séparant la position sortie de la position rentrée du fond 11 de moule. La course de boxage varie d'un récipient à l'autre, notamment selon la forme du fond et le diamètre (qui dépend lui-même de la capacité) du récipient.

Théoriquement, la course de boxage est réglée manuellement par l'opérateur chargé du paramétrage de l'installation **1**. Ce réglage peut par exemple être opéré directement au niveau du vérin **15** par montage ou par ajustement de butées de fin de course.

Il ne suffit cependant pas de paramétrer l'installation en faisant la supposition que chaque poste **3** de formage a été correctement réglé. En effet, l'opérateur peut avoir commis une erreur sur au moins l'un des postes **3** de formage, ou même avoir oublié de procéder au réglage lors d'un changement de référence de récipient à fabriquer.

C'est pourquoi il est souhaitable de déterminer la course de boxage pour chaque poste **3** de formage préalablement au lancement de la production, afin de vérifier que cette course correspond à une course théorique prédéfinie (et par exemple mémorisée dans l'unité **6** centrale de contrôle) pour laquelle la fabrication des récipients peut être jugée optimale.

Il est théoriquement possible d'instrumenter directement le fond **11** de moule pour identifier la position du fond **11** en position sortie et en position rentrée et ainsi en déduire, par différence, la course de boxage. Cependant, dans de nombreuses configurations de l'installation, l'environnement du fond **11** de moule est peu propice à une telle instrumentation, en raison notamment des vibrations dont sont affectés le fond **11** de moule et son vérin **15,** des conditions thermiques défavorables (température élevée ou fluctuante), ou encore de l'humidité éventuelle résultant de fuites de fluide (même minimes) aux raccords entre le moule **7** et des circuits d'alimentation en fluide caloporteur destiné à chauffer la paroi **8** et/ou le fond **11** de moule.

C'est pourquoi il est prévu, lors du paramétrage de l'installation **1,** de calculer la course de boxage de chaque poste **3** de formage, préalablement au lancement de la production, par l'intermédiaire de sa tige **20** d'étirage, pour vérifier, par simple comparaison, sa conformité à la course théorique prédéfinie.

Ainsi, le paramétrage de l'installation **1** incluant la vérification de la course de boxage est réalisé comme suit.

En résumé, partant de la position haute extrême :

- on amène la tige **20** en contact avec le fond **11** de moule, lequel est dans sa position sortie ou dans sa position rentrée ;
- on affecte à la tige **20** une position dite d'origine ;
- on commande le déplacement du fond **11** de moule ;
- en s'assurant du contact de la tige **20** avec le fond **11** de moule après le déplacement de celui-ci, on détermine ensuite la position correspondante de la tige **20** ;
- puis on calcule l'écart entre la position relevée de la tige **20** et la position d'origine, ce qui fournit la distance parcourue par la tige **20** lors du déplacement du fond **11** de moule, et donc la course de boxage.

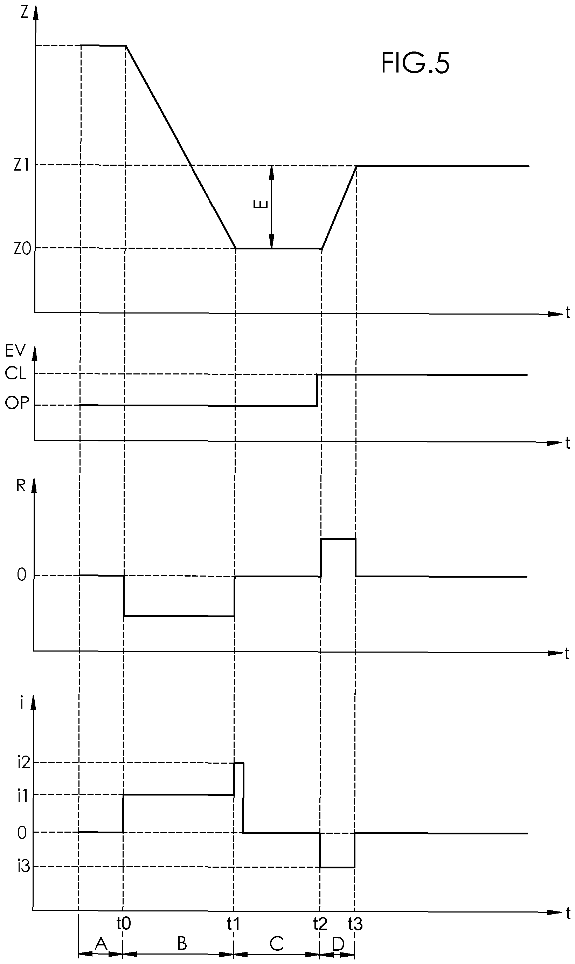

En pratique, on peut procéder de plusieurs manières différentes. Dans ce qui suit, on en présente trois, en référence respectivement aux figures 5, 6 et 7.

On décrit un premier mode de réalisation (figure 5), en partant d'une configuration initiale dans laquelle la tige **20** (dont la position est notée Z sur l'axe des ordonnées) est dans une position haute écartée du fond **11** de moule (en pratique, dans sa position haute extrême) et dans laquelle le fond **11** de moule est dans sa position sortie.

Sur la figure 5, les diagrammes sont tracés sur des repères dont l'axe des abscisses est un axe des temps (noté t). En fonctionnement stationnaire de l'installation **1,** le temps est relatif et équivaut à la position angulaire de la roue **4,** laquelle est mesurée grâce au capteur 5 de position angulaire. On notera que les diagrammes de la figure 5 sont fournis pour illustrer les différentes phases du procédé, mais ne correspondent pas nécessairement à des mesures effectuées. Il en va ainsi, en particulier, de la position de la tige **20**.

La configuration initiale correspond à la zone A sur les diagrammes synchronisés de la figure 5. L'électrovanne **17** de commande du déplacement du fond **11** de moule (la position de l'électrovanne **17** est notée **EV** sur le diagramme de la figure 5) est fermée (position **CL**) ; le courant (noté i) consommé par la machine **21** électrique est nul. La résultante (notée R) des efforts axiaux exercés sur la tige **20** est nulle.

En partant de cette configuration initiale, on fait fonctionner, à partir d'un instant t0, la machine **21** électrique en moteur, en alimentant le stator **24** en courant électrique alternatif pour exercer sur le chariot **23** (et donc la tige **20**) une force motrice axiale qui la déplace vers le bas (c'est-à-dire vers le fond **11** de moule), ce qui correspond à la zone B sur les diagrammes de la figure 5.

On évalue alors la résultante des efforts axiaux exercés sur la tige **20**. En pratique, cette évaluation consiste à mesurer la valeur du courant consommé par la machine **21** électrique fonctionnant en moteur. Tant que la tige **20** ne rencontre aucun obstacle à sa descente, le courant consommé est constant et correspond au courant nominal (noté i1) de fonctionnement de la machine **21,** nécessaire au déplacement de la tige **20**.

Lorsque la tige **20** atteint, à l'instant t1, la surface **12** supérieure du fond **11** de moule, celui-ci forme butée et empêche toute progression de la tige **20**. La résultante des efforts axiaux sur la tige **20** varie alors brusquement pour s'annuler, l'effort exercé par le fond **11** de moule sur la tige **20** étant égal en valeur absolue à l'effort exercé par le moteur formé par la machine **21** sur la tige **20** mais de signe opposé.

Cela se traduit par une variation dans le courant consommé par la machine **21** électrique fonctionnant en moteur. Plus précisément, le courant consommé augmente brusquement. On note i**2** la valeur maximale atteinte. Dès la détection de cette variation du courant consommé, on effectue les opérations suivantes, leur ordre important peu (ces opérations peuvent même être simultanées) :

- on affecte à la tige **20** une position Z0 d'origine (qui peut être de valeur nulle), qui correspond ici à la position basse du fond **11** de moule, et on mémorise cette position (par exemple dans une mémoire intégrée à l'unité **6** centrale de contrôle) ;
- on cesse d'appliquer la force motrice axiale sur la tige **20,** en l'occurrence en cessant de faire fonctionner la machine **21** électrique en moteur (autrement dit, en cessant de l'alimenter en courant électrique), et on bascule son fonctionnement en mode générateur.

Cette phase est notée C sur les diagrammes de la figure 5.

On commande alors le déplacement du fond **11** de moule vers sa position rentrée, en ouvrant l'électrovanne **17** (position **OP** sur la figure 5). En l'absence d'effort exercé par la machine **21** électrique sur la tige **20,** le fond **11** de moule entraîne celle-ci dans son déplacement, à partir de l'instant t2 (que l'on a représenté légèrement postérieur à la commande de déplacement du fond **11** de moule, pour matérialiser le temps de réponse de l'électrovanne **17**).

La tige **20** n'est toutefois pas complètement libre puisque, comme nous l'avons vu, son déplacement crée dans le circuit **22** d'alimentation électrique de la machine **21** un courant induit qui génère une force contre-électromotrice, dirigée axialement en sens inverse de l'effort exercé par le fond **11** de moule mais sensiblement plus faible, en valeur absolue, que celui-ci. Cette phase est notée D sur les diagrammes de la figure 5. On peut voir qu'au lieu de consommer du courant, la machine **21** en produit (on note i3 la valeur du courant ainsi produit).

On détermine alors la position finale correspondante, notée Z1, de la tige **20,** puis on calcule et on mémorise l'écart E (appelé course de la tige) entre cette position finale et la position d'origine de la tige **20** :

$$E = \left| Z1 - Z0 \right|$$

Si l'instant, noté $t_3$, où le fond 11 de moule atteint sa position rentrée, n'est pas connu, on peut néanmoins estimer sa valeur minimale en tenant compte des durées constatées au moyen d'essais de boxage préalables.

On peut donc prévoir, à partir de l'instant t2, une temporisation prédéterminée précédant la détermination de la position de la tige **20** supposée correspondre à la fin de course du fond **11** de moule.

La valeur ainsi calculée de l'écart E correspond alors à la course de boxage, en partant de l'hypothèse (généralement vérifiée dans la pratique) que la tige **20** est maintenue en contact permanent avec le fond 11 de moule.

On décrit à présent un deuxième mode de réalisation, en partant d'une configuration initiale dans laquelle la tige **20** est dans une position haute écartée du fond **11** de moule (en pratique, dans sa position haute extrême) et dans laquelle le fond **11** de moule est dans sa position rentrée.

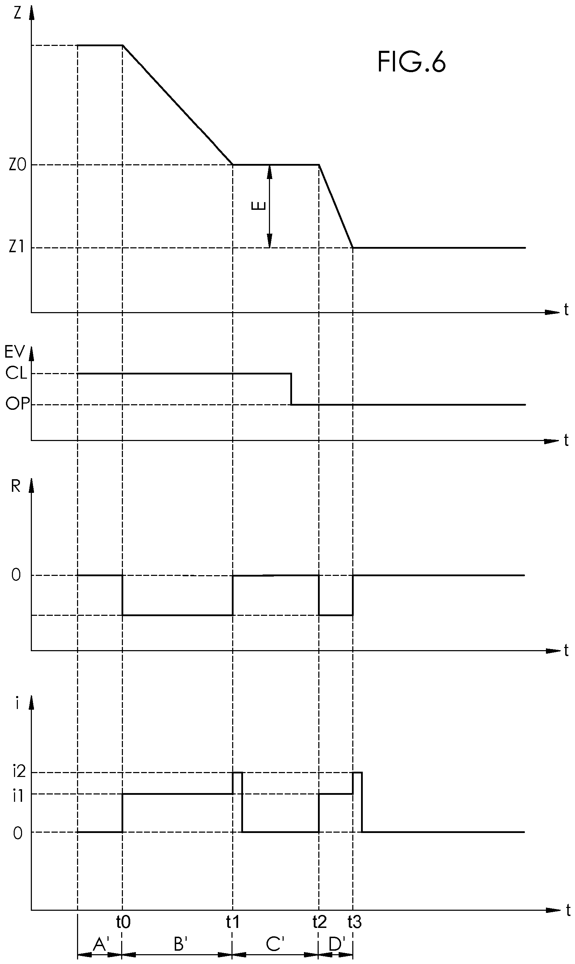

Sur la figure 6, construite de la même manière que la figure 5, les diagrammes sont tracés sur des repères dont l'axe des abscisses est un axe des temps (noté t). En fonctionnement stationnaire de l'installation **1,** le temps est relatif et équivaut à la position angulaire de la roue **4,** laquelle est mesurée grâce au capteur **5** de position angulaire.

La configuration initiale correspond à la zone A' sur les diagrammes synchronisés de la figure 6. L'électrovanne **17** de commande du déplacement du fond **11** de moule est ouverte (position **OP**) ; le courant consommé par la machine **21** électrique est nul. La résultante des efforts axiaux exercés sur la tige **20** est nulle.

En partant de cette configuration initiale, on fait fonctionner, à partir de l'instant t0, la machine **21** électrique en moteur, en alimentant le stator **24** en courant électrique alternatif pour exercer sur le chariot **23** (et donc la tige **20**) une force motrice axiale qui la déplace vers le bas (c'est-à-dire vers le fond **11** de moule), ce qui correspond à la zone B' sur les diagrammes de la figure **6.**

On évalue alors la résultante des efforts axiaux exercés sur la tige **20**. En pratique, cette évaluation consiste à mesurer la valeur du courant consommé par la machine **21** électrique fonctionnant en moteur. Tant que la tige **20** ne rencontre aucun obstacle à sa descente, le courant consommé est constant et correspond au courant nominal de fonctionnement (noté i1) de la machine **21,** nécessaire au déplacement de la tige **20**.

Lorsque la tige **20** atteint, à l'instant t1, la surface **12** supérieure du fond **11** de moule, celui-ci forme butée et empêche toute progression de la tige **20**. La résultante des efforts axiaux sur la tige **20** varie alors brusquement pour s'annuler, l'effort exercé par le fond **11** de moule sur la tige **20** étant égal en valeur absolue à l'effort exercé par le moteur formé par la machine **21** sur la tige **20** mais de signe opposé.

Cela se traduit par une variation dans le courant consommé par la machine **21** électrique fonctionnant en moteur. Plus précisément, le courant consommé augmente brusquement. On note i2 la valeur maximale atteinte. Dès la détection de cette variation du courant consommé, on effectue les opérations suivantes, leur ordre important peu (ces opérations peuvent même être simultanées) :

- on affecte à la tige une position Z0 d'origine (qui peut être de valeur nulle), qui correspond ici à la position haute du fond **11** de moule, et on mémorise cette position Z0 (par exemple dans une mémoire intégrée à l'unité **6** centrale de contrôle) ;
- on cesse d'appliquer la force motrice axiale sur la tige **20,** en l'occurrence en cessant de faire fonctionner la machine **21** électrique en moteur (autrement dit, en cessant de l'alimenter en courant électrique), et on bascule son fonctionnement en mode générateur.

Cette phase est notée C' sur les diagrammes de la figure 6.

On commande alors le déplacement du fond **11** de moule vers sa position sortie, en fermant l'électrovanne **17** (position **CL** sur la figure 6). Après une temporisation, tenant compte du temps de réponse de l'électrovanne **17** et du temps présumé de déplacement du fond **11** de moule, on fait à nouveau fonctionner, à partir de l'instant t2, la machine **21** électrique en moteur, en alimentant le stator **24** en courant électrique alternatif pour exercer sur le chariot **23** (et donc la tige **20**) une force motrice axiale qui la déplace vers le bas (c'est-à-dire vers le fond **11** de moule), ce qui correspond à la zone C'.

On évalue la résultante des efforts axiaux exercés sur la tige **20** de la même manière que précédemment. Tant que la tige **20** ne rencontre aucun obstacle à sa descente, le courant consommé est constant et correspond au courant nominal de fonctionnement (noté i1) de la machine **20,** nécessaire au déplacement de la tige **20.**

Lorsque la tige **20** atteint, à l'instant t3, la surface **12** supérieure du fond **11** de moule, celui-ci forme butée et empêche toute progression de la tige **20.** La résultante des efforts axiaux sur la tige **20** varie alors brusquement pour s'annuler, l'effort exercé par le fond **11** de moule sur la tige **20** étant égal en valeur absolue à l'effort exercé par le moteur **21** sur la tige **11** mais de signe opposé. Cette phase est notée D' sur la figure 6.

Cela se traduit par une variation dans le courant consommé par la machine **21** électrique fonctionnant en moteur. Plus précisément, le courant consommé augmente brusquement. La valeur i2 est la même que précédemment. Dès la détection de cette variation du courant consommé, on effectue les opérations suivantes, leur ordre important peu (ces opérations peuvent même être simultanées) :

- on affecte à la tige une position Z1 finale, qui correspond ici à la position sortie du fond **11** de moule, et on mémorise cette position Z1 (par exemple dans une mémoire intégrée à l'unité **6** centrale de contrôle) ;
- on cesse d'appliquer la force motrice axiale sur la tige **20,** en l'occurrence en cessant de faire fonctionner la machine **21** électrique en moteur (autrement dit, en cessant de l'alimenter en courant électrique), et on bascule son fonctionnement en mode générateur.

Puis on calcule et on mémorise l'écart E (appelé course de la tige) entre cette position finale et la position d'origine de la tige **20,** qui correspond à la course de boxage :

$$E = \left| Z1 - Z0 \right|$$

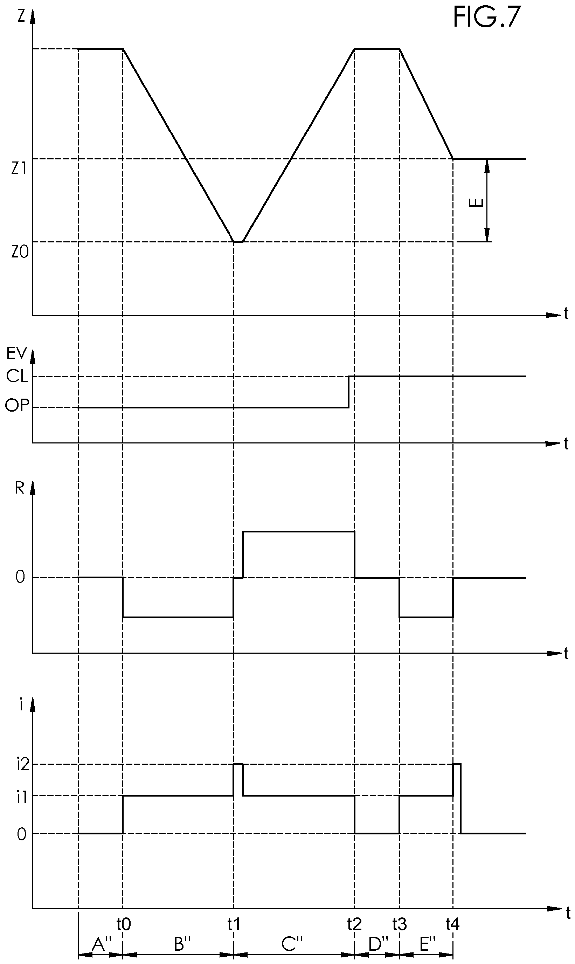

On décrit un troisième mode de réalisation (figure 7), en partant d'une configuration initiale dans laquelle la tige **20** (dont la position est notée Z sur l'axe des ordonnées) est dans une position haute écartée du fond **11** de moule (en pratique, dans sa position haute extrême) et dans laquelle le fond **11** de moule est dans sa position sortie (mais, en variante, il pourrait être en position rentrée).

Sur la figure 7, les diagrammes sont tracés sur des repères dont l'axe des abscisses est un axe des temps (noté t). En fonctionnement stationnaire de l'installation **1,** le temps est relatif et équivaut à la position angulaire de la roue **4,** laquelle est mesurée grâce au capteur **5** de position angulaire. On notera que les diagrammes de la figure 7 sont fournis pour illustrer les différentes phases du procédé, mais ne correspondent pas nécessairement à des mesures effectuées. Il en va ainsi, en particulier, de la position de la tige **20.**

La configuration initiale correspond à la zone A" sur les diagrammes synchronisés de la figure 7. L'électrovanne **17** de commande du déplacement du fond **11** de moule (la position de l'électrovanne **17** est notée **EV** sur le diagramme de la figure 7) est fermée (position **CL**) (en variante, l'électrovanne **17** pourrait être ouverte (position **OP**) ; le courant (noté i) consommé par la machine **21** électrique est nul. La résultante (notée R) des efforts axiaux exercés sur la tige **20** est nulle.

En partant de cette configuration initiale, on fait fonctionner, à partir d'un instant t0, la machine **21** électrique en moteur, en alimentant le stator **24** en courant électrique alternatif pour exercer sur le chariot **23** (et donc la tige **20**) une force motrice axiale qui la déplace vers le bas (c'est-à-dire vers le fond **11** de moule), ce qui correspond à la zone B" sur les diagrammes de la figure 7.

On évalue alors la résultante des efforts axiaux exercés sur la tige **20.** En pratique, cette évaluation consiste à mesurer la valeur du courant consommé par la machine **21** électrique fonctionnant en moteur. Tant que la tige **20** ne rencontre aucun obstacle à sa descente, le courant consommé est constant et correspond au courant nominal (noté i1) de fonctionnement de la machine **21,** nécessaire au déplacement de la tige **20.**

Lorsque la tige **20** atteint, à l'instant t1, la surface **12** supérieure du fond **11** de moule, celui-ci forme butée et empêche toute progression de la tige **20.** La résultante des efforts axiaux sur la tige **20** varie alors brusquement pour s'annuler, l'effort exercé par le fond **11** de moule sur la tige **20** étant égal en valeur absolue à l'effort exercé par le moteur **21** sur la tige **20** mais de signe opposé.

Cela se traduit par une variation dans le courant consommé par le moteur formé par la machine **21** électrique fonctionnant en moteur. Plus précisément, le courant consommé augmente brusquement. On note i2 la valeur maximale atteinte. Dès la détection de cette variation du courant consommé, on effectue les opérations suivantes, leur ordre important peu (ces opérations peuvent même être simultanées) :

- on affecte à la tige **20** une position Z0 d'origine (qui peut être de valeur nulle), qui correspond ici à la position basse du fond **11** de moule, et on mémorise cette position (par exemple dans une mémoire intégrée à l'unité **6** centrale de contrôle) ;
- on commande le déplacement de la tige **20** pour la replacer en position haute au moyen de la machine **21** électrique fonctionnant toujours en moteur, puis
- puis on commande (après une temporisation) le déplacement du fond **11** de moule vers sa position rentrée (ou, en variante, vers sa position sortie), en ouvrant (respectivement en fermant) l'électrovanne **17** (position **OP** - respectivement position **CL** - sur la figure 7).

Sur la figure 7, on note t2 l'instant auquel la tige **20** atteint sa position haute. De manière arbitraire, on a représenté la commande d'ouverture (respectivement de fermeture) de l'électrovanne légèrement en avance de l'instant t2.

Cette phase est notée C" sur les diagrammes de la figure 7.

Lorsque la tige **20** atteint sa position haute, on bascule le fonctionnement de la machine **21** électrique en générateur, ce qui bloque la tige **20** en position. Après une temporisation (correspondant éventuellement à un tour complet de la roue **4,** phase D"), lors de laquelle la tige **20** est maintenue dans sa position haute par la machine **21** et lors de laquelle le fond **11** de moule est maintenu dans sa position rentrée (respectivement sortie), on commande à nouveau, à partir d'un instant noté t3, le déplacement de la tige **20** vers le fond de moule en rebasculant le fonctionnement de la machine **21** électrique en moteur (phase E").

On évalue alors la résultante des efforts axiaux exercés sur la tige **20,** de la manière indiquée précédemment. Tant que la tige **20** ne rencontre pas le fond **11** de moule, le courant consommé est constant et correspond au courant nominal (noté i1) de fonctionnement de la machine **21,** nécessaire au déplacement de la tige **20.**

Lorsque la tige **20** atteint, à l'instant t4, la surface **12** supérieure du fond **11** de moule, celui-ci forme butée et empêche toute progression de la tige **20.** La résultante des efforts axiaux sur la tige **20** varie alors à nouveau brusquement pour s'annuler, l'effort exercé par le fond **11** de moule sur la tige **20** étant égal en valeur absolue à l'effort exercé par le moteur formé par la machine **21** sur la tige **20** mais de signe opposé.

Cela se traduit par une variation dans le courant consommé par la machine **21** électrique fonctionnant en moteur. Plus précisément, le courant consommé augmente brusquement pour atteindre à nouveau i2. Dès la détection de cette variation du courant consommé, on affecte à la tige **20** une position Z1 finale, qui correspond ici à la position haute (respectivement basse) du fond **11** de moule, et on mémorise cette position (par exemple dans une mémoire intégrée à l'unité **6** centrale de contrôle).

Puis on calcule et on mémorise la course E de la tige **20,** qui correspond, comme précédemment, à la course de boxage :

$$E = \left| Z1 - Z0 \right|$$

Il résulte du procédé de paramétrage présenté ci-dessus un certain nombre d'avantages.

Premièrement, avant même de lancer la production on vérifie aisément, lors du paramétrage de l'installation **1** que la course réelle de boxage correspond, sur chaque poste **3** de formage, à la course théorique correspondant au modèle de récipient à former.

Deuxièmement, il n'est pas nécessaire d'instrumenter le fond **11** de moule puisque l'information peut être obtenue indirectement par l'intermédiaire de la tige **20** d'étirage.

Troisièmement, l'information ainsi obtenue est fiable, puisque la tige **20** et le fond **11** de moule sont accolés pendant tout le temps du déplacement du fond **11** de moule de sa position sortie à sa position rentrée (ou réciproquement).

Il en résulte une diminution du risque de défaut (voire de malformation) affectant les récipients en raison d'une erreur de réglage de l'installation **1.**

La vérification de la course de boxage pouvant être réalisée de manière systématique et automatisée lors du démarrage de l'installation **1** avant le lancement de la production, les erreurs de paramétrage lors des changements de référence sont ainsi limitées.

**Revendications**

1. Procédé de paramétrage d'une installation (**1**) de fabrication de récipients par étirage soufflage à partir d'ébauches en matière plastique, cette installation (**1**) comprenant :

- un moule (**7**) muni d'une paroi (**8**) définissant une cavité (**9**) à l'empreinte du récipient, s'étendant selon un axe (**10**) principal du moule et d'un fond (**11**) de moule déplaçable axialement par rapport à la paroi (**8**) entre une position sortie et une position rentrée,

- un dispositif (**14**) de commande du déplacement du fond (**11**) de moule, apte à exercer sur le fond (**11**) de moule une poussée axiale pour le déplacer de sa position sortie à sa position rentrée et réciproquement ;

- un dispositif (**18**) d'étirage comprenant une tige (**20**) d'étirage déplaçable axialement par rapport à la paroi (**8**) et une machine (**21**) électrique accouplée à la tige (**20**) ;

ce procédé étant **caractérisé en ce qu'**il comprend les opérations consistant, à partir d'une configuration initiale dans laquelle la tige (**20**) est dans une position haute écartée du fond (**11**) de moule et dans laquelle le fond (**11**) de moule est dans sa position sortie ou dans sa position rentrée, à :

- faire fonctionner la machine (**21**) électrique en moteur pour exercer sur la tige (**20**) une force motrice axiale qui la déplace vers le fond (**11**) de moule ;
- évaluer la résultante des efforts axiaux exercés sur la tige (**20**) ;
- dès lors qu'est détectée une variation dans la résultante des efforts, affecter à la tige (**20**) une position (**Z0**) d'origine ;
- mémoriser la position (**Z0**) d'origine ;
- commander le déplacement du fond (**11**) de moule vers sa position rentrée ou, respectivement, sa position sortie ;
- affecter à la tige la position (**Z1**) correspondante, dite finale, de la tige (**20**) ;
- calculer et mémoriser l'écart (**E**), appelé course de la tige (**20**), entre la position (**Z1**) finale et la position (**Z0**) d'origine.

2. Procédé selon la revendication 1, **caractérisé en ce que**, dans la configuration initiale, le fond (**11**) de moule est dans sa position sortie.

3. Procédé selon la revendication 1 ou la revendication 2, **caractérisé en ce qu'**il comprend, entre l'opération de mémorisation de la position (**Z0**) d'origine et la commande de déplacement du fond (**11**) de moule, une opération consistant à replacer la tige (**20**) en position haute.

4. Procédé selon la revendication 3, **caractérisé en ce qu'**il comprend, après l'opération de commande de déplacement du fond (**11**) de moule, les opérations consistant à :

- la machine (**21**) électrique fonctionnant en moteur, déplacer la tige (**20**) depuis sa position haute vers le fond (**11**) de moule ;
- évaluer la résultante des efforts axiaux exercés sur la tige (**20**) ;
- dès lors qu'est détectée une variation dans la résultante des efforts, affecter à la tige (**20**) sa position (**Z1**) finale.

5. Procédé selon la revendication 2, **caractérisé en ce qu'**il comprend, entre l'opération de mémorisation de la position (**Z0**) d'origine et la commande de déplacement du fond (**11**) de moule, une opération consistant à cesser d'appliquer la force motrice axiale sur la tige (**20**).

6. Procédé selon la revendication 5, **caractérisé en ce que** la cessation de l'application de la force motrice axiale sur la tige (**20**) est réalisée par la cessation du fonctionnement de la machine (**21**) électrique en moteur.

7. Procédé selon la revendication 6, **caractérisée en ce que**, après la cessation de l'utilisation de la machine (**21**) électrique en moteur et avant la commande de déplacement du fond (**11**) de moule, la machine (**21**) électrique est basculée pour fonctionner en générateur.

8. Procédé selon l'une des revendications précédentes, **caractérisé en ce qu'**il comprend, après la commande du déplacement du fond (**11**) de moule, une temporisation prédéterminée.

9. Procédé selon l'une des revendications précédentes, **caractérisé en ce qu'**il comprend une opération de comparaison de la course de la tige (**20**) avec une valeur théorique prédéterminée.

10. Procédé selon l'une des revendications précédentes, **caractérisé en ce que** l'évaluation de la résultante des efforts axiaux exercés sur la tige (**20**) est réalisée par la mesure du courant consommé par la machine (**21**) électrique fonctionnant en moteur, et la détection d'une variation dans la résultante des efforts exercés sur la tige (**20**) est réalisée par la détection d'une variation dans le courant consommé par la machine (**21**) électrique fonctionnant en moteur.

**Patentansprüche**

1. Verfahren zur Parametrierung einer Anlage (1) zur Herstellung von Behältern durch Streckblasen ausgehend von Vorformlingen aus Kunststoff, wobei diese Anlage (1) umfasst:

- eine Form (7), die mit einer Wand (8) versehen ist, die einen Hohlraum (9) mit dem Formabdruck des Behälters definiert, der sich entlang einer Hauptachse (10) der Form erstreckt, und mit einem Formboden (11), der axial bezüglich der Wand (8) zwischen einer ausgefahrenen Position und einer eingefahrenen Position verschiebbar ist,

- eine Vorrichtung (14) zur Steuerung der Verschiebung des Formbodens (11), die in der Lage ist, auf den Formboden (11) einen axialen Schub auszuüben, um ihn aus seiner ausgefahrenen Position in seine eingefahrene Position und umgekehrt zu verschieben;

- eine Reckvorrichtung (18), welche eine Reckstange (20), die bezüglich der Wand (8) axial verschiebbar ist, und eine mit der Stange (20) gekoppelte elektrische Maschine (21) umfasst;

wobei dieses Verfahren **dadurch gekennzeichnet ist, dass** es die Arbeitgänge umfasst, welche darin bestehen, ausgehend von einer Anfangskonfiguration, in welcher sich die Stange (20) in einer vom Formboden (11) entfernten hohen Position befindet und in welcher sich der Formboden (11) in seiner ausgefahrenen Position oder in seiner eingefahrenen Position befindet:

- die elektrische Maschine (21) als Motor arbeiten zu lassen, um auf die Stange (20) eine axiale Bewegungskraft auszuüben, welche sie zum Formboden (11) hin verschiebt;

- die Resultierende der auf die Stange (20) ausgeübten axialen Kräfte zu berechnen;

- sobald eine Änderung der Resultierenden der Kräfte detektiert worden ist, der Stange (20) eine Ausgangsposition (Z0) zuzuweisen;

- die Ausgangsposition (Z0) zu speichern;

- die Verschiebung des Formbodens (11) zu seiner eingefahrenen Position bzw. seiner ausgefahrenen Position hin zu steuern;

- der Stange die entsprechende Position (Z1), Endposition der Stange (20) genannt, zuzuweisen;

- den Abstand (E) zwischen der Endposition (Z1) und der Ausgangsposition (Z0), Hub der Stange (20) genannt, zu berechnen und zu speichern.

2. Verfahren nach Anspruch 1, **dadurch gekennzeichnet, dass** sich in der Anfangskonfiguration der Formboden (11) in seiner ausgefahrenen Position befindet.

3. Verfahren nach Anspruch 1 oder Anspruch 2, **dadurch gekennzeichnet, dass** es zwischen dem Arbeitsgang der Speicherung der Ausgangsposition (Z0) und der Steuerung der Verschiebung des Formbodens (11) einen Arbeitsgang umfasst, der darin besteht, die Stange (20) wieder in die hohe Position zu bringen.

4. Verfahren nach Anspruch 3, **dadurch gekenn-**

**zeichnet, dass** es nach dem Arbeitsgang der Steuerung der Verschiebung des Formbodens (11) die Arbeitsgänge umfasst, welche darin bestehen:

- während die elektrische Maschine (21) als Motor arbeitet, die Stange (20) aus ihrer hohen Position zum Formboden (11) hin zu verschieben;

- die Resultierende der auf die Stange (20) ausgeübten axialen Kräfte zu berechnen;

- sobald eine Änderung in der Resultierenden der Kräfte detektiert worden ist, der Stange (20) ihre Endposition (Z1) zuzuweisen.

5. Verfahren nach Anspruch 2, **dadurch gekennzeichnet, dass** es zwischen dem Arbeitsgang der Speicherung der Ausgangsposition (Z0) und der Steuerung der Verschiebung des Formbodens (11) einen Arbeitsgang umfasst, der darin besteht, das Ausüben der axialen Bewegungskraft auf die Stange (20) zu beenden.

6. Verfahren nach Anspruch 5, **dadurch gekennzeichnet, dass** die Beendigung der Ausübung der axialen Bewegungskraft auf die Stange (20) durch die Beendigung des Betriebs der elektrischen Maschine (21) als Motor bewirkt wird.

7. Verfahren nach Anspruch 6, **dadurch gekennzeichnet, dass** nach der Beendigung der Verwendung der elektrischen Maschine (21) als Motor und vor der Steuerung der Verschiebung des Formbodens (11) die elektrische Maschine (21) umgeschaltet wird, um als Generator zu arbeiten.

8. Verfahren nach einem der vorhergehenden Ansprüche, **dadurch gekennzeichnet, dass** es nach der Steuerung der Verschiebung des Formbodens (11) eine bestimmte Verzögerungszeit umfasst.

9. Verfahren nach einem der vorhergehenden Ansprüche, **dadurch gekennzeichnet, dass** es einen Arbeitsgang des Vergleichs des Hubes der Stange (20) mit einem vorbestimmten theoretischen Wert umfasst.

10. Verfahren nach einem der vorhergehenden Ansprüche, **dadurch gekennzeichnet, dass** die Berechnung der Resultierenden der auf die Stange (20) ausgeübten axialen Kräfte durch die Messung des Stroms realisiert wird, der von der als Motor arbeitenden elektrischen Maschine (21) aufgenommen wird, und die Detektion einer Änderung der Resultierenden der auf die Stange (20) ausgeübten axialen Kräfte durch die Detektion einer Änderung des Stroms realisiert wird, der von der als Motor arbeitenden elektrischen Maschine (21) aufgenommen wird.

**Claims**

1. Method for parameterizing an installation (1) for manufacturing containers by stretch blow-moulding from blanks made of plastic material, this installation (1) comprising:

   - a mould (7) provided with a wall (8) defining a cavity (9) bearing the impression of the container, extending along a main axis (10) of the mould, and with a mould bottom (11) which is moveable axially in relation to the wall (8) between an extended position and a retracted position,
   - a device (14) for commanding the movement of the mould bottom (11), able to exert an axial thrust on the mould bottom (11) to move it from its extended position to its retracted position and vice versa;
   - a stretching device (18) comprising a stretching rod (20) which is moveable axially in relation to the wall (8) and an electric machine (21) coupled to the rod (20);

   this method being **characterized in that** it comprises the operations consisting, from an initial configuration in which the rod (20) is in a raised position away from the mould bottom (11) and in which the mould bottom (11) is in its extended position or in its retracted position, in:

   - causing the electrical machine (21) to operate as a motor to exert on the rod (20) an axial driving force which moves it towards the mould bottom (11);
   - evaluating the resultant of the axial forces exerted on the rod (20);
   - as soon as a variation in the resultant of the forces is detected, assigning a position (Z0) of origin to the rod (20);
   - storing the position (Z0) of origin;
   - commanding the movement of the mould bottom (11) towards its retracted position or, respectively, its extended position;
   - assigning the corresponding, so-called final, position (Z1) of the rod (20) to the rod;
   - calculating and storing the distance (E), called travel of the rod (20), between the final position (Z1) and the position (Z0) of origin.

2. Method according to Claim 1, **characterized in that**, in the initial configuration, the mould bottom (11) is in its extended position.

3. Method according to Claim 1 or Claim 2, **characterized in that** it comprises, between the operation of storing the position (Z0) of origin and the commanding of movement of the mould bottom (11), an operation consisting in repositioning the rod (20) in the raised position.

4. Method according to Claim 3, **characterized in that** it comprises, after the operation of commanding the movement of the rod bottom (11), the operations consisting in:

   - with the electric machine (21) operating as a motor, moving the rod (20) from its raised position towards the mould bottom (11),
   - evaluating the resultant of the axial forces exerted on the rod (20);
   - as soon as a variation in the resultant of the forces is detected, assigning its final position (Z1) to the rod (20).

5. Method according to Claim 2, **characterized in that** it comprises, between the operation of storing the position (Z0) of origin and the commanding of movement of the mould bottom (11), an operation consisting in ceasing to apply the axial driving force to the rod (20) .

6. Method according to Claim 5, **characterized in that** the cessation of the application of the axial driving force to the rod (20) is achieved by the cessation of the operation of the electrical machine (21) as a motor.

7. Method according to Claim 6, **characterized in that**, after the cessation of the use of the electrical machine (21) as a motor and before the commanding of movement of the mould bottom (11), the electric machine (21) is switched to operate as a generator.

8. Method according to one of the preceding claims, **characterized in that** it comprises, after the commanding of the movement of the mould bottom (11), a predetermined time delay.

9. Method according to one of the preceding claims, **characterized in that** it comprises an operation for comparison of the travel of the rod (20) with a predetermined theoretical value.

10. Method according to one of the preceding claims, **characterized in that** the evaluation of the resultant of the axial forces exerted on the rod (20) is achieved by the measurement of the current consumed by the electric machine (21) operating as a motor, and the detection of a variation in the resultant of the forces exerted on the rod (20) is achieved by the detection of a variation in the current consumed by the electric machine (21) operating as a motor.

FIG.1

FIG.2

FIG.3

FIG.4

FIG.5

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2975332

- WO 2012156638 A